# EUROPÄISCHE PATENTSCHRIFT

(11) **EP 0 586 939 B1**
(45) Veröffentlichungstag und Bekanntmachung des Hinweises auf die Patenterteilung: **14.01.1998**
(21) Anmeldenummer: 93113198.1
(22) Anmeldetag: 18.08.1993
(51) Int. Cl.: A23L 1/317, A23C 19/09, A23L 1/03, A23L 1/314

(54) **Dauerwurst**
Preserved sausage e.g. salami
Saucisse préservée p.e. salami

(30) Priorität: 11.09.1992 DE 4230434
(43) Veröffentlichungstag der Anmeldung: 16.03.1994
(73) Patentinhaber: H. & E. Reinert KG Westfälische Fleischwarenfabrik, 33775 Versmold (DE)
(72) Erfinder: Schmelz, Gerhard, D-49214 Bad Rothenfelde (DE)
(74) Vertreter: Stracke, Alexander, Dipl.-Ing.

(56) Entgegenhaltungen:
- EP-A- 0 478 526
- US-A- 4 304 868
- DATABASE WPI Week 8716, Derwent Publications Ltd., London, GB; AN 87-112874 & JP-A-62 058 969 (FUJI OIL KK) 14. März 1987
- FLEISCH Bd. 37, Nr. 1 , 1983 Seiten 6 - 8 G. JESCHKE ET AL 'TECHNOLOGISCHE UND MIKROBIOLOGISCHE ASPEKTE BEI DER APPLIKATION VON PENICILLIUMKULTUREN IN DER FLEISCHWERTSCHAFT'
- PATENT ABSTRACTS OF JAPAN vol. 012, no. 491 (C-0554)21. Dezember 1988 & JP-A-63 202 359 (SNOW BRAND MILK PROD. CO. LTD.) 22. August 1988
- DATABASE WPI Week 8423, Derwent Publications Ltd., London, GB; AN 84-140773 & DD-A-206 733 (R. ROHDE) 8. Februar 1984 & CHEMICAL ABSTRACTS, vol. 84, no. 4, 26. Januar 1976, Columbus, Ohio, US; abstract no. 19296, R. ROHDE ET AL 'VERFAHREN ZUR HERSTELLUNG LEBENSMITTELN TIERISCHER HERKUNFT'

## Beschreibung

Die Erfindung betrifft eine Dauerwurst entsprechend dem Oberbegriff des Anspruches 1 sowie ein verfahren zu deren Herstellung.

Bei den der Dauerwurst beigemengten Aromabildnern handelt es sich zumeist um solche der Familie Micrococcaceai. Die Säurebildnern sind überlicherweise solche aus der Familie Lactobacillaceae. Diese werden so ausgewählt, daß sie in der Dauerwurst eine schnelle Säuerung bewirken. Dies hat zwar eine beschleunigte Reifung der Dauerwurst zur Folge, wirkt sich allerdings auf die Entwicklung des Wurstaromas nicht begünstigend aus. Die Reifung der Dauerwurst erfolgt gewöhnlich in einer Woche, danach wird die Wurst üblicherweise bis zum Versand in einem Klima mit niedriger Temperatur und niedriger Luftfeuchtigkeit gelagert. Diese Lagerung hat jedoch keinen begünstigenden Einfluß mehr auf die Aromabildung. Es ist bekannt, die Dauerwurst nach der Reifung mit einer äußeren Käsehülle zu versehen. Dies führt dazu, daß zum Verzehr einer in dieser Weise behandelten Dauerwurst am Rand ein intensiver Käsegeschmack wahrgenommen wird, wohingegen der Geschmack im Inneren der Wurst keine Veränderung erfährt. Dauerwurst wird überlicherweise zum Schutz gegenüber Trocknungsfehlern und mikrobiell bedingten Produktabnormitäten fast ausschließlich mit Darm hergestellt.

Aus DATABASE WPI, AN 87-112874 (JP-A-62 058 969) ist es bekannt, ein Fleischprodukt mit einem Käseanteil zwischen 5 und 40 % herzustellen, bei dem der Käseanteil entweder aus Hart- oder aus Weichkäse in Granulatform bei einer Korngröße von 0,5 - 3 mm beigegeben wird, wobei die Mischung zur Erzielung eines pasteten- oder brühwurstähnlichen Fertigproduktes auf mindestens 80° C erhitzt wird. Hierdurch können selbst bei Verwendung von Weichkäse in Form eines Granulates in der angegebenen Korngröß von Letzterem biologische und enzymatische Veränderungsprozesse im Grenzbereich der Käsepartikel nicht mehr ausgehen. Da zum Zeitpunkt der Beimischung des Käseproduktes in die Basismasse das Käseprodukt eine feste Konsistenz haben soll, da eine einheitliche Verteilung des Käses nicht angestrebt wird, sondern die Verteilung in Form von Partikeln erreicht werden soll, werden, falls Weichkäsesorten eingesetzt werden, diese in tiefgekühlter Form beigegeben.

Aus PATENT ABSTR. OF JAPAN 12, 491 (C-0554) (JP-A-63 202 359) ist es bekannt, ein Fleischerzeugnis mit Käseanteil herzustellen, wobei zunächst eine Mischung aus Sojaprotein, Wasser und Käse hergestellt und dieses eine Stunde bei 80° C erhitzt wird. Diese Mischung wird zerkleinert und der Fleischmasse beigegeben, wobei das Fertigprodukt im Temperaturbereich von 70° C nochmals erhitzt wird. Die Beeinflussung der Fleischmasse durch biologische, enzymatische Veränderungen ist dabei von vornherein ausgeschlossen. Die Masse wird zu Brühwürstchen, Hacksteaks und dergleichen verarbeitet.

Aus der EP-A-0 478 526 ist ein käseenthaltendes Fleischprodukt bekannt, bei dem entweder Schmelzkäse oder bei einem Gerinnungsprozeß bei Temperaturen von 25 - 40° C gewonnene Milch einem zu fermentierenden Fleischmaterial zugesetzt wird. Der Milchproduktenanteil am Gemisch liegt zwischen 10 und 50, vorzugsweise 20 - 30 Gewichtsprozent. Die Verwendung von pulverisiertem Weichkäse ist nicht angesprochen, ebenso nicht angesprochen sind Maßnahmen, die eine unerwünschte biologische und enzymtische Einwirkung des Milchproduktes auf die Fleischmasse verhindern. Das damit erreichbare Fertigprodukt kann aufgrund des sehr hohen Milchproduktenanteiles nicht als aromatisierte Dauerwurst angesehen werden.

Der vorliegenden Erfindung liegt die Aufgabe zugrunde, eine Dauerwurst herzustellen, die sich durch ein gleichmäßiges, unverwechselbar feines Aroma bei guter Haltbarkeit und hoher optischer Akzeptanz auszeichnet. Der Erfindung liegt ferner die Aufgabe zugrunde, ein Verfahren zur Herstellung einer derartigen Dauerwurst aufzuzeigen.

Die erfindungsgemäße Lösung besteht bezüglich der Dauerwurst darin, daß das wurstbrät pulverisierten Weichkäse enthält. Insbesondere erhält man ein hervorragendes und unverwechselbares Aroma dann, wenn man als Wurstbrät ein Salamibrät und als Weichkäse Camembert verwendet. Die Pulverisierung des Weichkäses trägt dazu bei, die Haltbarkeit der Dauerwurst-Weichkäsemasse zu erhöhen, weil im Gegensatz zu größeren Käsemassen von dem pulverisierten Weichkäse im Brät keine ungewollte Fermentierung ausgehen kann. Die Pulverform des Weichkäses verhindert außerdem, daß nach der Vermischung von Dauerwurstbrät und Weichkäsepulver der Käseanteil im Wurstbrät mit dem bloßen Auge sichtbar ist. Dies ist insbesondere deshalb von Vorteil, da größere Käsestücke in der ausgereiften Dauerwurst als gelbliche, ranzig aussehende Stellen vom Verbraucher wahrgenommen würden. Es hat sich als besonders zweckmäßig erwiesen, den Weichkäse zu einem Pulver mit der Korngröße von etwa 0,1mm zu zerkleinern.

Speziell für das Kombinationsprodukt aus Salamibrät und Camembert abgestimmte Reifekulturen, die sich aus Aromabildnern, Hefe und Säurebildnern zusammensetzen, bewirken in Ihrer Zusammensetzung eine langsame Säurerung des Wurstbräts, was für die hervorragende Ausbildung des Aromas besonders wichtig ist. Zur weiteren positiven Geschmackssteigerung wird die Oberfläche des Salami-Camembert-Gemisches mit ausgewählten und zusammengestellten Edelschimmelkulturen geimpft. Bei diesen Kulturen handelt es sich zum einen um Edelschimmelkulturen wie sie auch für die Camembertherstellung benutzt werden, zum zweiten werden spezielle Edelschimmelkulturen für Rohwurst verwendet. Diese Umhüllung bietet Schutz vor Trocknungsfehlern und mikrobiell bedingten Produktabnormitäten, weiterhin besteht der Vorteil derartiger Umhüllung darin, daß die Edelschimmelkulturen das Aroma des Produktes in idealer Weise zusätzlich positiv beeinflussen, im Gegensatz zum üblichen Darm, der hier in Fortfall kommt.

Bezüglich des Herstellungsverfahrens besteht die erfindungsgemäße Lösung darin, daß vor der Vermischung des Weichkäses mit dem Dauerwurstbrät dieses tiefgefroren zerkleinert wird und der Reifeprozess sich in drei Stufen, einer Haupt-, einer Zwischen- und einer Nachreifungsphase mit unterschiedlichen klimatischen Bedingungen vollzieht. Für die Zerkleinerung des Weichkäses wird dieser auf eine Temperatur von 22°C bis -26°C abgekühlt. Es hat sich durch Versuche gezeigt, daß insbesondere die Einhaltung einer Temperatur von exakt -24°C positive Auswirkungen auf den Zerkleinerungsprozeß hat.

Der Reifeprozeß vollzieht sich im einzelnen in drei Stufen mit unterschiedlichen klimatischen Bedingungen. Es hat sich als besonders günstig erwiesen, die Dauerwurst-Weichkäse-Mischung zunächst rund eine Woche zur Absäuerung und Umrötung zu lagern. Dieser sogenannte Hauptreifungsprozeß erfordert eine Temperatur im Bereich von 15°C bis 23°C und eine relative Luftfeuchtigkeit von 75% bis 95%. Versuche haben gezeigt, daß eine optimale Reifung dadurch erreicht wird, daß die Temperatur während dieser Zeit kontinuierlich von 22°C auf 18°C und die relative Luftfeuchtigkeit von 90° kontinuierlich auf 76° gesenkt wird.

Danach erfolgt eine ungefähr eine Woche dauernden Zwischenreifungsphase, die der Produktstabilisierung und der zusätzlichen Aromabildung dient. Außerdem werden während dieser Zeit mögliche negative Reaktionen des Käses, die zum Beispiel in einer Gasbildung bestehen können, was zu einer Porigkeit des Endproduktes führt, ausgeschaltet.

Nach der Zwischenreifungsphase wird die Dauerwurst an der Produktoberfläche mit den obenerwähnten Edelpilzkulturen geimpft, es schließt sich eine Nachreifungsphase an. Während dieser Zeit wird das Produkt bei konstanten klimatischen Verhältnissen bei Temperaturen im Bereich von 14°C bis 20°C und bei einer relativen Luftfeuchtigkeit im Bereich von 60% bis 80% gelagert. Eine optimale Ergänzung der Mikroorganismen des Käses, die zur Ausbildung des einmaligen und unverwechselbaren Aromas der Dauerwurst beitragen, wird insbesondere dann erzielt, wenn die Temperatur bei exakt 16°C und die relative Luftfeuchtigkeit bei 76% gehalten wird. Bei diesen klimatischen Randbedingungen ist es ausgeschlossen, daß irgendwie negativ geartete Geruchs-, Geschmacks- und Konsistenzveränderungen auftreten können. Die Dauer dieser Nachreifungsphase beträgt ca. 3 Wochen.

Nach Durchlaufen der oben im einzelnen angeführten Reifeprozeßphasen wird die Dauerwurst mit einer speziellen Verpackung versehen. Die Verpackung hat die positiven Eigenschaften, eine weitere positive Aromaintensivierung nicht zu verhindern und andererseits den Feuchtigkeitsverlust der Wurst auf ca. 0,5% bis 0,6% zu begrenzen.

## Patentansprüche

1. Dauerwurst, bestehend aus einem mit Aromabildnern und Säurebildnern versehenen Wurstbrät, **dadurch gekennzeichnet**, daß das Wurstbrät pulverisierten Weichkäse enthält.

2. Dauerwurst nach Anspruch 1, dadurch gekennzeichnet, daß das Wurstbrät Salamibrät ist.

3. Dauerwurst nach Anspruch 2, dadurch gekennzeichnet, daß der Weichkäseanteil aus Camembert besteht.

4. Dauerwurst nach Anspruch 3, dadurch gekennzeichnet, daß die Korngröße des pulverisierten Weichkäses in etwa 0,1mm beträgt.

5. Dauerwurst nach Anspruch 4, dadurch gekennzeichnet, daß auf die Oberfläche der Dauerwurst Edelschimmelkulturen aufgebracht sind.

6. Dauerwurst nach Anspruch 5, dadurch gekennzeichnet, daß die auf die Oberfläche der Dauerwurst aufgebrachten Edelschimmelkulturen die gleichen Kulturen sind, wie sie auch für die Herstellung des dem Wurstbrät beigemengten Weichkäses verwendet werden.

7. Dauerwurst nach Anspruch 6, dadurch gekennzeichnet, daß neben den Edelschimmelkulturen zur Weichkäseherstellung auch Rohwurstedelschimmelkulturen verwendet werden.

8. Verfahren zur Herstellung der Dauerwurst nach Anspruch 1, dadurch gekennzeichnet, daß der Weichkäse in tiefgefrorenem Zustand zerkleinert wird und daß nach der Vermischung von Wurstbrät und Weichkäse der Reifeprozeß der Dauerwurst in einer Haupt-, einer Zwischen- und einer Nachreifungsphase mit unterschiedlicher klimatischer Umgebung durchgeführt wird.

9. Verfahren nach Anspruch 8, dadurch gekennzeichnet, daß der Weichkäse bei einer Temperatur von -22°C bis -26°C, vorzugsweise bei -24°C pulverisiert wird.

10. Verfahren nach Anspruch 8. dadurch gekennzeichnet, daß während der Hauptreifungsphase eine Temperatur im Bereich von 15°C bis 23°C und eine relative Luftfeuchtigkeit von 75% bis 95% eingehalten wird.

11. Verfahren nach Anspruch 10, dadurch gekennzeichnet, daß die Temperatur und die Luftfeuchtigkeit während der Hauptreifungsphase kontinuierlich von 22°c auf 18°C und von 90% auf 76% abnimmt.

12. Verfahren nach Anspruch 8, dadurch gekennzeichnet, daß während der Nachreifungsphase die Temperatur im Bereich von 14°C bis 20°C, vorzugsweise 16°C und die relative Luftfeuchtigkeit im Bereich von 60% bis 80%, vorzugsweise bei 76%, konstant gehalten wird.

## Claims

1. Preserved sausage comprising sausagemeat provided with flavouring agents and acidifiers, characterised in that the sausagemeat contains powdered soft cheese.

2. Preserved sausage according to claim 1 characterised in that the sausagemeat is salami sausage.

3. Preserved sausage according to claim 2 characterised in that the soft cheese component comprises Camembert.

4. Preserved sausage according to claim 3 characterised in that the grain size of the powdered soft cheese is approximately 0.1 mm.

5. Preserved sausage according to claim 4 characterized in that noble mould cultures are applied to the surface of the preserved sausage.

6. Preserved sausage according to claim 5 characterised in that the noble mould cultures applied to the surface of the preserved sausage are the same cultures as are also used for production of the soft cheese added to the sausagemeat.

7. Preserved sausage according to claim 6 characterised in that untreated sausage noble mould cultures are also used besides the noble mould cultures for soft cheese production.

8. A process for the production of preserved sausage according to claim 1 characterised in that the soft cheese is crushed in the deep-frozen condition and that after mixing of sausagemeat and soft cheese the preserved sausage ripening process is effected in a main phase, an intermediate phase and a post-ripening phase with a different climatic environment.

9. A process according to claim 8 characterised in that the soft cheese is powdered at a temperature of -22°C to -26°C, preferably at - 24°C.

10. A process according to claim 8 characterised in that a temperature in the range of 15°C to 23°C and a relative air humidity of 75% to 95% is maintained during the main ripening phase.

11. A process according to claim 10 characterised in that the temperature and the air humidity continuously decreases during the main ripening phase from 22° to 18°C and from 90% to 76%.

12. A process according to claim 8 characterised in that during the post-ripening phase the temperature is kept constant in the region of 14°C to 20°C, preferably 16 °C, and the relative air humidity is kept constant in the region of 60% to 80%, preferably at 76%.

## Revendications

1. Saucisson sec, composé d'une chair à saucisse munie d'agents de sapidité et d'acidificateurs, caractérisé en ce que la chair à saucisse contient du fromage tendre pulvérisé.

2. Saucisson sec selon la revendication 1, caractérisé en ce que la chair à saucisse est de la chair à salami.

3. Saucisson sec selon la revendication 2, caractérisé en ce que la part de fromage tendre est composée de camembert.

4. Saucisson sec selon la revendication 3, caractérisé en ce que la taille des grains du fromage tendre pulvérisé vaut approximativement 0,1 mm.

5. Saucisson sec selon la revendication 4, caractérisé en ce que des cultures de champignons sont ajoutées à la surface du saucisson sec.

6. Saucisson sec selon la revendication 5, caractérisé en ce que les cultures de champignons ajoutées à la surface du saucisson sec sont les mêmes cultures que celles qui sont employées pour la fabrication du fromage tendre ajouté à la chair à saucisse.

7. Saucisson sec selon la revendication 6, caractérisé en ce que, en plus des cultures de champignons pour la fabrication du fromage tendre, on utilise également des cultures de champignons pour saucisse crue.

8. Procédé de fabrication du saucisson sec selon la revendication 1, caractérisé en ce que le fromage tendre est fragmenté à l'état congelé et en ce que, après le mélange de la chair à saucisse et du fromage tendre, le procédé de maturation du saucisson sec se déroule en une phase de maturation principale, une phase de maturation intermédiaire et une phase de maturation finale présentant des conditions climatiques différentes.

9. Procédé selon la revendication 8, caractérisé en ce que le fromage tendre est pulvérisé à une température de - 22°C à -26°C, de préférence à -24°C.

10. procéde selon la revendication 8, caractérisé en ce que, pendant la phase de maturation principale, on maintient une température comprise entre 15°C et 23°C et une humidité relative de 75% à 95%.

11. procédé selon la revendication 10, caractérisé en ce que la température et l'humidité de l'air pendant la phase de maturation principale sont abaissées de manière continue de 22°C à 18°C et de 90% à 76%.

12. Procédé selon la revendication 8, caractérisé en ce que, pendant la phase de maturation finale, la température est maintenue constante dans le domaine de 14°C à 20°C, de préférence à 16°C, et l'humidité relative est maintenue constante dans le domaine de 60% à 80%, de préférence à 76%.
